Europäisches Patentamt

European Patent Office

Office européen des brevets

(11) Publication number: **0 001 482**
A1

# (12) EUROPEAN PATENT APPLICATION

(21) Application number: **78300387.4**

(22) Date of filing: **14.09.78**

(51) Int. Cl.²: **F 16 L 9/12, B 29 D 23/02**

(30) Priority: **15.09.77 ZA 775526**

(43) Date of publication of application: **18.04.79**
Bulletin 79/8

(84) Designated Contracting States: **BE CH DE FR GB LU NL SE**

(71) Applicant: **AECI LTD, 16th Floor Office Tower Carlton Centre Commissioner Street, ZA-Johannesburg 2001 Transvaal (ZA)**

(72) Inventor: **Hart, Kenneth Roy, 31 Lindsay Avenue, ZA-Durban Natal (ZA)**

(74) Representative: **Cooper, Alan Victor et al, Imperial Chemical Industries Limited Legal Department: Patents Thames House North Millbank, London SW1P 4QG (GB)**

(54) **Thermoplastics pipes provided with integral sockets and/or spigots.**

(57) Thermoplastics pipes having integral thermoplastics sockets fused onto their ends and a process for making such pipes by inserting the end of a socket (4) or spigot into a mould (14) and moulding molten thermoplastics onto the end. Preferably the socket (4) or spigot has a transversely extending protrusion (7) engageable with a corresponding recess in the mould (14) to provide positive resistance to expulsion of the socket (4) or spigot from the mould (14) by the pressure of the thermoplastics material.

THERMOPLASTICS PIPES PROVIDED WITH INTEGRAL SOCKETS AND/OR SPIGOTS

This invention relates to thermoplastics pipes provided with integral sockets and/or spigots useful in joining the pipes.

Thermoplastics pipes are usually made by extrusion or by an injection moulding process as described in British patent specification 1 402 395, the disclosure of which is hereby incorporated by reference. Such processes do not allow the production of integral sockets and/or spigots and so hitherto sockets and spigots have been attached to pipes in other ways such as welding or adhesive bonding.

This invention avoids the need to weld or adhesively bond sockets or spigots onto thermoplastics pipes by homogeneously fusing a thermoplastics socket or spigot to the pipe as it is being made. In a refinement of the invention, homogeneous fusion is promoted by use of a socket or spigot having an axially extending neck provided with a transversely (especially radially in the case of cylindrical pipes) extending protrusion.

Accordingly, this invention provides a thermoplastics pipe provided with a socket and/or spigot wherein one end of a thermoplastics socket or spigot has been homogeneously fused onto an end of the pipe so that the socket or spigot is integral with the pipe. By "homogeneously fused" is excluded bonds containing extraneous material such as adhesives or welding fluxes. Preferably the sockets and spigots are preformed by injection moulding from the same thermoplastics material as the pipe.

This invention also provides a method for making a thermoplastics pipe having an integral socket and/or spigot wherein:

a) there is used a mould having male and female parts spaced apart to provide a cavity which defines a length of the pipe,

b) the end of the socket or spigot which is to become integral with the pipe is accommodated in one end of the cavity around the male mould part,

c) that part of the cavity unoccupied by the end of the socket or spigot is filled with molten thermoplastics material which is allowed to contact the end of the socket or spigot whereupon homogeneous fusion occurs, and

d) when the thermoplastics material is sufficiently form stable, the socket or spigot is removed from the cavity.

Preferably the sockets or spigots used in the process have an axially extending neck whose outer surface is provided with a transversely extending protrusion and the female part of the mould has at least one recess into which a protrusion on the neck can fit. When the neck is positioned in the cavity, a protrusion can be engaged by the recess thereby providing a positive resistance to expulsion of the neck from the cavity by the pressure of the molten thermoplastics material. This enables the thermoplastics material to be injected into the cavity under high pressures which promote homogeneous fusion. Hence, the lengths of pipe are preferably made by injection moulding and pressures used can be over 10 bar (for example, 15 to 150 bar if foamable thermoplastics material is used) and even higher (for example, over 200 bar if non-foaming material is used). Pressures of 500 bar can be used with non-foaming material.

After the socket or spigot has fused to the freshly moulded pipe, the mould is preferably opened and the socket or spigot are withdrawn from the male mould together with either the whole of the length of pipe or only part of its length so as to leave at least an end of the pipe on the male mould whereupon extra lengths of pipe can be moulded on as described in British patent specification 1 402 395, preferably to form a length of pipe at least 6 m long.

Preferred thermoplastics materials are polyvinyl chloride and polyolefins especially low, intermediate and high density polyethylenes, polybutenes and propylene polymers. Crystalline propylene polymers include polypropylene and copolymers of propylene and up to 15% (by weight of the copolymer) of ethylene. The polyolefins may be blended with rubbers to improve their impact strengths, especially ethylene-propylene rubbers optionally diene modified. The polyolefins may contain pigments and stabilisers such as carbon black, heat stabilisers and antioxidants. They may also contain foaming agents, for example, as described in "Kunststoffe" 47, No. 8 of 1957, pages 446 to 455.

The invention is illustrated by the following preferred embodiment described with reference to the drawings in which:

Figure 1 shows a perspective view of part of a length of pipe having an integral socket, and

Figure 2 shows in section a socket introduced into a mould having a cavity which defines a length of pipe.

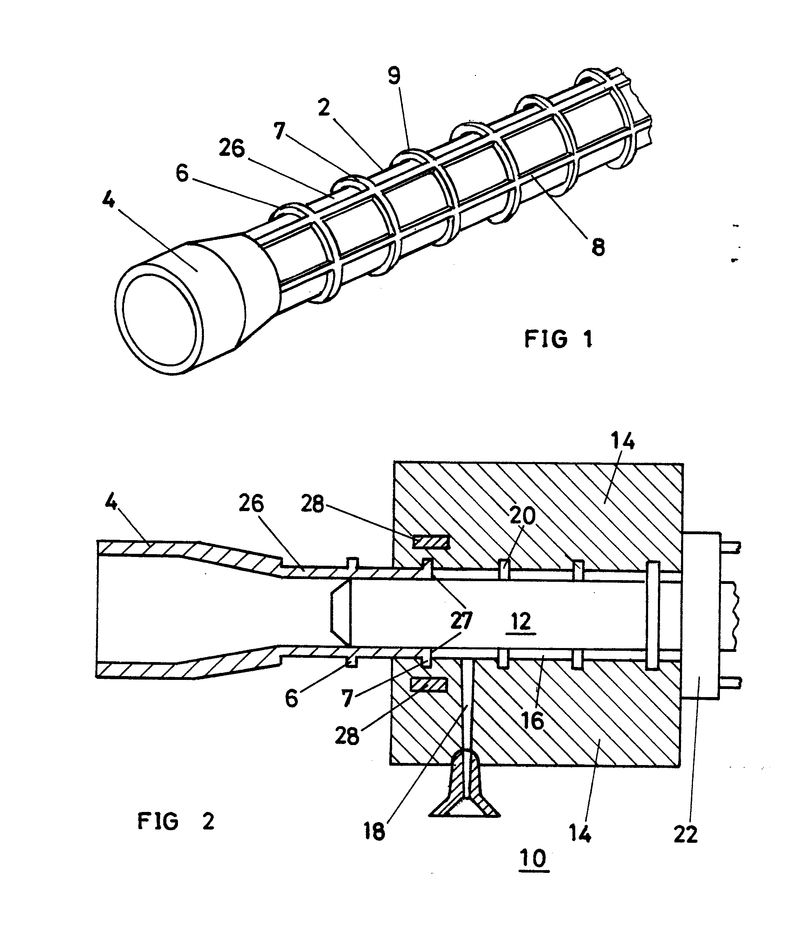

Figure 1 shows a length of cylindrical ribbed pipe 2 integral with a socket 4 having an axially extending neck 26, the extent of which is shown more clearly in Figure 2. The outer surface of neck 26 is provided with radially protruding circumferential ribs 6 and 7, rib 7 forming part of end surface 27 of neck 26. Pipe 2 is provided with longitudinal and circumferential strengthening ribs 8 and 9.

Figure 2 shows an injection mould 10 comprising cylindrical male mould part 12 within female mould parts 14 and spaced so as to provide cavity 16 which defines pipe 2. Female mould parts 14 contain an injection port 18 through which molten thermoplastics material under pressure can be injected into cavity 16. Female mould parts 14 also contain recesses 20 corresponding to ribs 7 and 9 on neck 26 and pipe 2.

In operation neck 26 of pre-formed thermoplastics socket 4 is introduced onto male mould part 12 and female mould parts 14 are closed around end surface 27 of neck 26 so as to engage rib 7 in their end recess 20. End surface 27 therefore closes one end of cavity 16. The other end is closed by plunger 22 slidably mounted on male mould part 12. Cavity 16 is then filled via port 18 with molten thermoplastics material under pressure. Engagement of rib 7 in a recess 20 provides positive resistance to expulsion of neck 26 from cavity 16 by the pressure of the injected thermoplastics material during injection. As a result of pressure and heat, homogeneous fusion of the injected thermoplastics material with end surface 27 of neck 26 occurs. The thermoplastics material is cooled until it is form stable and then female mould parts 14 are opened and plunger 22 is advanced to move pipe 2 and neck 26 along mould part 12. In this way neck 26 is removed from cavity 16 and in particular is withdrawn from male mould part 12 together with at least part of the length of the freshly moulded pipe which is now integral with spigot 4.

Socket 4 can be sufficiently well fused to pipe 2 for the join to be able to resist water pressure even when a conventionally buried pipe is run over by motor vehicles as occurs on building sites. This is achieved despite the lapse of time between the manufacture of the pre-formed socket and its fusion to pipe 2. The pipes can therefore be used as sewer pipes which are frequently layed and then subjected to rough treatment during subsequent building operations.

To facilitate homogeneous fusion especially when high melting thermoplastics materials are used, auxiliary heating may be provided to soften the end surface of socket or spigot prior to or during the filling of the cavity with molten thermoplastics material. The auxiliary heating preferably does not destroy the form stability of any transversely extending protrusions on the socket or spigot.

Figure 2 illustrates an embodiment of the invention in which electrical heating elements 28 are provided in female mould parts 14 around end surface 27 for softening end surface 27. Depending on the thermoplastics material used, element 28 may or may not be necessary.

The illustrated embodiments show a socket, but spigots which can cooperate with sockets to form socket and spigot pipe joints may be fused to the lengths of pipe in the same way. In particular a spigot may be fused onto the other end of a pipe having an integral socket.

CLAIMS

1.    A thermoplastics pipe provided with a socket and/or spigot characterised in that one end of a thermoplastics socket or spigot has been homogeneously fused onto an end of the pipe so that the socket or spigot is integral with the pipe.

2.    A pipe as claimed in claim 1 characterised in that the end of the socket or spigot which is fused onto the pipe is provided by an axial extension of the socket or spigot in the form of a neck whose outer surface is provided with one or more transversely extending protrusions.

3.    A cylindrical pipe according to claim 2 characterised in that at least one of the protrusions on the neck is a radially protruding circumferential rib.

4.    A method for making a thermoplastics pipe having an integral socket and/or spigot characterised in that:

a) there is used a mould having male and female parts spaced apart to provide a cavity which defines a length of the pipe,

b) the end of the socket or spigot which is to become integral with the pipe is accommodated in one end of the cavity around the male mould part,

c) that part of the cavity unoccupied by the end of the socket or spigot is filled with molten thermoplastics material which is allowed to contact the end of the socket or spigot whereupon homogeneous fusion occurs, and

d) when the thermoplastics material is sufficiently form stable, the socket or spigot is removed from the cavity.

5.    A method as claimed in claim 4 characterised in that there is used a socket or spigot as claimed in claim 2 and a female part of the mould having at least one recess engageable with a protrusion on the neck of the

0001482

socket or spigot wherein when the end of the neck is accommodated in the cavity, a protrusion on the neck is engaged by a recess in a female mould part.

6.    A method as claimed in claim 5 characterised in that the end surface of the neck is subjected to auxiliary heating to soften the end surface of the neck.

0001482

1/1

FIG 1

FIG 2

10

European Patent Office

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| - | <u>DE - B - 1 158 239</u> (KRAUSS-MAFFEI) <br> * column 3, line 67 to column 4. line 32; fig. 1, 2 * <br>-- | 1,4 | F 16 L 9/12 <br> B 29 D 23/02 |
| - | <u>DE - B - 1 962 737</u> (HARMSTORF) <br> * column 6, line 60 to column 8, line 21; fig. 1 * <br>-- | 1,6 | |
| - | <u>CH - A - 574 808</u> (DURO-PENTA) <br> * column 1, line 68 to column 2, line 32; fig. 2 * <br>-- <br> & US - A - 3 992 503 <br>----- | 1-6 | |

### TECHNICAL FIELDS SEARCHED (Int.Cl.²)

B 29 D 23/02
B 29 F 1/10
F 16 L 9/12

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 1-12-1978 | Examiner <br> SCHLABBACH | |

EPO Form 1503.1 06.78